# EUROPEAN PATENT APPLICATION

(11) **EP 3 587 974 A1**
(43) Date of publication of application: **01.01.2020**
(21) Application number: 19180859.1
(22) Date of filing: 18.06.2019
(51) Int. Cl.: F26B 13/00, F26B 3/28, B41F 23/04, B41J 11/00

(54) **DRYING DEVICE, IMAGE FORMING DEVICE, DRYING METHOD, AND INKJET TEXTILE PRINTING METHOD**

(30) Priority: 25.06.2018 JP 2018119614
(71) Applicant: KONICA MINOLTA, INC., Tokyo 100-7015 (JP)
(72) Inventor: Maeda, Akio, Tokyo, 100-7015 (JP)
(74) Representative: Henkel & Partner mbB

(57) **Abstract**

A drying device (10) to dry fabric on which textile printing is performed by ink being blown includes a heat source (12) and a suction unit (11). The heat source (12) generates heat at a position where the heat source does not contact the fabric. The suction unit (11) sucks air at a position where the fabric is between the heat source and the suction unit.

## Description

### Technical Field

The present invention relates to a drying device, an image forming device, a drying method, and an inkjet textile printing method.

### Background Art

There are image forming devices for textile printing which eject ink onto fabric and form an image(s) or coating(s). Ink which has landed on the fabric is fixed on the fabric by a fixing operation. One of such fixing operations is a drying operation, in which solvent is evaporated and pigment is fixed on the fabric.

In a technique to dry fabric using a drying device performing such a drying operation, warm air in a predetermined temperature range is sent onto fabric so that solvent of aqueous ink is appropriately evaporated while bleeding is prevented (Patent Document 1).

### Citation List

### Patent Literature

Patent Document 1: Japanese Patent Application Laid Open Publication No. H09-133464A

### Summary of Invention

### Technical Problem to be Solved

However, as the evaporated solvent is left inside the drying device or circulated in the heating unit, it reaches a part at a high temperature such as the surface of the heating unit to react and generate odor unpreferably.

An object of the present invention is to provide a drying device, an image forming device, a drying method, and an inkjet textile printing method which may appropriately prevent generation of odor in drying ink on the fabric. Solution to Problem

To achieve at least one of the abovementioned objects, the present invention described in claim 1 is a drying device to dry fabric on which textile printing is performed by ink being blown, including:
a heat source which generates heat at a position where the heat source does not contact the fabric; and
a suction unit which sucks air at a position where the fabric is between the heat source and the suction unit.

The present invention described in claim 2 is the drying device according to claim 1,
wherein the heat source is arranged on a side of one surface of the fabric, and
wherein a suction position where the air is sucked by the suction unit is on an opposite side of the one surface of the fabric.

The present invention described in claim 3 is the drying device according to claim 2, wherein the side of the one surface is an opposite side of a surface which ink lands on of the fabric.

The present invention described in claim 4 is the drying device according to any one of claims 1 to 3, wherein a suction position where the air is sucked by the suction unit is above the heat source in a gravitational direction.

The present invention described in claim 5 is the drying device according to any one of claims 1 to 4, including a controller which controls a heating operation of the heat source and a suction operation of the suction unit,
wherein the controller performs control such that a temperature of the fabric is from 100 °C to 200 °C in an operation of drying the fabric.

The present invention described in claim 6 is the drying device according to claim 5, including a first measurer which measures the temperature of the fabric,
wherein the controller performs control concerning adjustment of the temperature of the fabric on a basis of a measured temperature of the first measurer.

The present invention described in claim 7 is the drying device according to claim 5 or 6, including a second measurer which measures a temperature of the heat source,
wherein the controller performs control concerning the adjustment of the temperature of the fabric on a basis of a measured temperature of the second measurer.

The present invention described in claim 8 is the drying device according to any one of claims 1 to 7, including a conveyor which causes the fabric to pass through a position between the heat source and a suction position where the air is sucked by the suction unit.

The present invention described in claim 9 is the drying device according to claim 8, including a case as a drying room which has the heat source and the suction position inside,
wherein the conveyor contacts the fabric only outside the case only to support the fabric.

The present invention described in claim 10 is the drying device according to claim 9, wherein the conveyor has, outside the case, an unwinding operation unit which unwinds the fabric which is continuous and a winding operation unit which winds the fabric.

The present invention described in claim 11 is an image forming device including:
the drying device according to any one of claims 1 to 10; and
an image recorder which blows ink.

The present invention described in claim 12 is the image forming device according to claim 11, wherein the ink contains water, glycol solvent, pigment, and fixing resin.

The present invention described in claim 13 is the image forming device according to claim 12, wherein the glycol solvent contains at least one of glycerin, ethylene glycol, propylene glycol, and diethylene glycol.

The present invention described in claim 14 is the image forming device according to claim 12 or 13, wherein an amount of the glycol solvent contained in the ink is equal to or more than 20% by mass and less than 60% by mass.

The present invention described in claim 15 is a drying method to dry fabric on which textile printing is performed by ink being blown, the drying method including a heating step of heating the fabric with a heat source which generates heat at a position where the heat source does not contact the fabric and sucking air at a position which is on an opposite side of the fabric from the heat source.

The present invention described in claim 16 is an inkjet textile printing method including:
an image recording step of performing textile printing by blowing ink on fabric; and
a heating step of heating the fabric with a heat source which generates heat at a position where the heat source does not contact the fabric and sucking air at a position which is on an opposite side of the fabric from the heat source.

The present invention described in claim 17 is the inkjet textile printing method according to claim 16, wherein the ink contains water, glycol solvent, pigment, and fixing resin.

The present invention described in claim 18 is the inkjet textile printing method according to claim 17, wherein the glycol solvent contains at least one of glycerin, ethylene glycol, propylene glycol, and diethylene glycol.

The present invention described in claim 19 is the inkjet textile printing method according to claim 17 or 18, wherein an amount of the glycol solvent contained in the ink is equal to or more than 20% by mass and less than 60% by mass.

### Advantageous Effects of Invention

The present invention has an effect of preventing generation of odor in an operation of drying ink on fabric.

### Brief Description of Drawings

FIG. 1 is a schematic drawing of an overall configuration of an inkjet textile printing system including a drying device of the first embodiment.
FIG. 2 is a block diagram showing a functional configuration of the inkjet textile printing system of this embodiment.
FIG. 3A is a flowchart showing control steps of an image forming process.
FIG. 3B is a flowchart showing control steps of the heating control process.
FIG. 4 is a schematic drawing showing an overall configuration of an inkjet textile printing system of the second embodiment.
FIG. 5 is a schematic drawing of an overall configuration of an inkjet textile printing system of the third embodiment.
FIG. 6 is a schematic drawing showing an overall configuration of an inkjet textile printing system of the fourth embodiment.

### Description of Embodiments

Hereinafter, embodiments of the present invention are described with reference to the drawings.

### [First Embodiment]

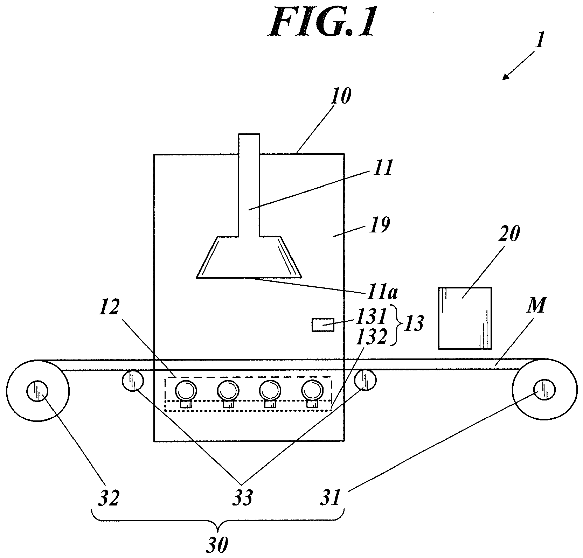

FIG. 1 is a schematic drawing of an overall configuration of an inkjet textile printing system 1 of the first embodiment.

The inkjet textile printing system 1 includes an image recorder 20, a conveyor 30, a dryer 10 (drying device), etc. The image recorder 20 is an inkjet-type one which performs image recording (textile printing) with multiple nozzles from which ink is ejected (blown) to land on a recording medium M. The dryer 10 dries the ink which is blown to land on the recording medium M. The conveyor 30 moves the recording medium M to pass through the position which ink lands on from the image recorder 20 and the inside of a drying room 19 of the dryer 10.

The inkjet textile printing system 1 uses fabric as the recording medium M. The type of fabric is not particularly limited. Here, the recording medium M (fabric) which is successively connected is used.

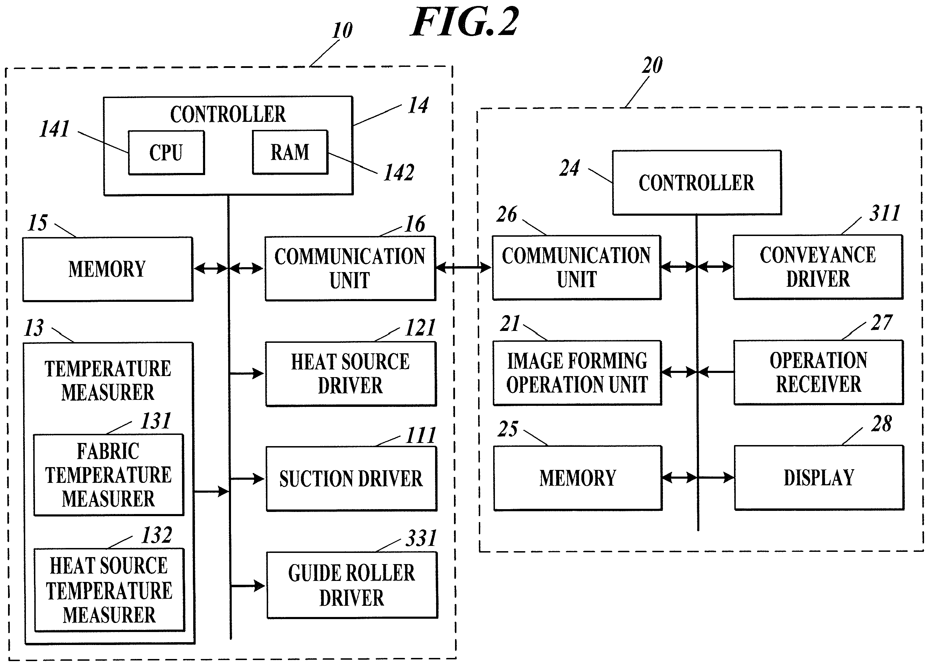

The conveyor 30 includes an unwinding roller 31 (unwinding operation unit) which unwinds the rolled recording medium M, a winding roller 32 (winding operation unit) which winds the unwound recording medium M, and a guide roller 33 which properly supports the recording medium M between the unwinding roller 31 and winding roller 32 which are arranged outside the drying room 19 (case). Here, the recording medium M is configured to move without contacting anything but the guide roller 33 which is arranged outside the drying room 19 (case) only, from when it is unwound to when it is wound. Alternatively, the recording medium M may be supported by the conveyance surface or such at some point outside the drying room 19. Here, the operation control of the unwinding roller 31 and the winding roller 32 is done by a controller 24 (see FIG. 2) of the image recorder 20.

The guide roller 33 may be included in whole or part in the dryer 10 or the image recorder 20. The rotation control of the guide roller 33 may be done by a controller 14 of the dryer 10, for example, in synchronization with the rotation speed of the winding roller 32 or the unwinding roller 31. Alternatively, the guide roller 33 may be a driven roller which rotates along with the movement of the recording medium M.

The image recorder 20 may eject ink in one or more colors. Aqueous pigment ink for textile printing is used in the inkjet textile printing system for 1 of this embodiment. Here, water, glycol solvent, pigment, and fixing resin at least are contained in the aqueous pigment ink for textile printing. The glycol solvent is contained so as to mainly improve the ink ejection capacity. The amount of the glycol solvent contained in the aqueous pigment ink for textile printing is equal to or larger than 20% by mass and less than 60% by mass.

Glycerin, ethylene glycol, propylene glycol, diethylene glycol, dipropylene glycol, triethylene glycol, 1,3-propanediol, 1,2-butanediol, 1,3-butanediol, 1,2-pentanediol, 1,2-hexanediol, and sugar alcohols are used as the glycol solvent, for example. Especially, at least any of glycerin, ethylene glycol, propylene glycol, and diethylene glycol is preferably contained so as to stabilize the ink ejection capacity in particular.

Water-soluble organic solvent other than the glycol solvent above may be contained in the aqueous pigment ink for textile printing. Additives such as surfactants, preservatives, mildewproofing agents, color forming aids, antistatic agents, antioxidants, antifoaming agents, lubricants, and rheological agents other than the above may be contained in the aqueous pigment ink for textile printing.

The dryer 10 includes a heater 12 (heat source), a suction unit 11, a temperature measurer 13, the controller 14 (see FIG. 2), etc. The heater 12, a suction opening 11a of the suction unit 11, and the temperature measurer 13 are arranged inside the case as the drying room 19. The case has a slit for the recording medium M to come in and out. The case may also have an opening(s) and its number and size are determined such that the inside temperature or the flow of air generated by the operation of the suction unit 11 are not largely fluctuated.

The heater 12 is, for example, a rod-shaped infrared heater which generates heat (heat generation) when current applied, and may be extended in the maximum width expected in the width direction perpendicular to the direction of conveyance of the recording medium M. The material is not especially limited here, and a carbon heater or a ceramic heater may be used, for example. The heater 12 may be a heater using radiant heat of a halogen lamp. The heater 12 is arranged at a position separated at a distance not to contact the recording medium M on the opposite side (back surface side, side of one surface) of the surface on which ink lands of the recording medium M seen from the conveyance path of the recording medium M. The heater 12 may function at a certain position and in a certain calorific value, in which the temperature of the fabric may be raised up to a temperature (for example, 100 °C) at which the water and the solvent in ink described above, especially the glycol solvent, are evaporated, with the amount of airflow generated by the suction of the suction unit 11 in combination.

The suction unit 11 sucks out the air inside the drying room 19 of the dryer 10. The suction unit 11 includes a suction fan, for example. The suction opening 11a (suction position) of the suction unit 11 is arranged in the range where it faces the heater 12 in part or whole with the conveyance path (that is, the fabric) in between on the side (front surface side, opposite side of the one surface) of the surface on which ink lands of the recording medium M seen from the conveyance path of the recording medium M. That is, the solvent evaporated from the surface of the recording medium M flows with the air in the direction away from the heater 12, enters the suction opening 11a, and is discharged from the drying room 19. The suction unit 11 may be configured to catch and remove a predetermined constituent from the sucked air. Here, the dryer 10 is not configured to send the sucked air back to the drying room 19 to be circulated again. In a case where the sucked air is to be recirculated, there is a configuration where the constituent of the solvent is certainly removed from the dry air in the circulation path. In that case, a ventilation opening is formed and arranged so that the air flow (blow) circulated and sent inside the drying room 19 does not affect the air flow by the suction unit 11. The recording medium M sent to the drying room 19 by the operation of the conveyor 30 passes through the position between the heater 12 and the suction opening 11a, is discharged from the dryer 10 (drying room 19), and is wound up by the winding roller 32.

The temperature measurer 13 includes a fabric temperature measurer 131 (first measurer), a heat source temperature measurer 132 (second measurer), etc. The fabric temperature measurer 131 measures the temperature of the fabric in motion at a predetermined position inside the drying room 19. An infrared thermometer which contactlessly measures the temperature, etc. may be used as the fabric temperature measurer 131. The heat source temperature measurer 132 measures the temperature of the heater 12. The temperature of the heater 12 may be the temperature at a predetermined position on the surface of the heater 12 or at a position (in the air or on the member covering the heater 12) separated at a predetermined distance from the surface of the heater 12. The heat source measurer 132 may contactlessly measure the temperature similarly to the fabric temperature measurer 131, or measure the temperature with a thermistor contacting the heat source. The temperature measurer 13 does not necessarily include both the fabric temperature measurer 131 and the heat source temperature measurer 132, and may include only one of those two. For example, the temperature of the fabric may be estimated from the heat source temperature, in consideration of the type of fabric, the conveyance speed of the fabric, or the amount of landing ink.

The dryer 10 may be a part of the inkjet recording device (image forming device) which is formed integrally with the image recorder 20 and the conveyor 30, or may be an individual drying device which is formed separately from the image recorder 20, etc. In a case where the dryer 10 is included in the inkjet recording device as a part of it, the operation control of the dryer 10 may be done by the controller 24 integrally.

The controller 14 controls the operation of the dryer 10.

FIG. 2 is a block diagram showing a functional configuration of the inkjet textile printing system 1 of this embodiment.

The dryer 10 includes a memory 15, a communication unit 16, a heat source driver 121, a suction driver 111, a guide roller driver 331, etc. in addition to the temperature measurer 13 and the controller 14 described above. The image recorder 20 includes a controller 24, a memory 25, a communication unit 26, an image forming operation unit 21, a conveyance driver 311, an operation receiver 27, a display 28, etc.

The controller 14 of the dryer 10 includes a CPU 141 (Central Processing Unit), a RAM 142 (Random Access Memory), etc. The CPU 141 is a processor performing various kinds of calculation processing. The RAM 142 provides the CPU 141 with memory space for the operation, and stores temporary data therein. The controller 14 controls the operation of the heat source driver 121, the suction driver 111 (heating operation, suction operation), etc. on the basis of the measurement data of the temperature measurer 13 (measured temperature, including its history). The controller 14 causes the guide roller driver 331 to perform the rotation of the guide roller 33 in synchronization with the rotation of the unwinding roller 31 and/or the winding roller 32 on the basis of the operation speed information of the unwinding roller 31 and/or the winding roller 32 obtained from the image recorder 20 by the communication unit 16.

The memory 15 stores programs, setting data, etc. therein. An HDD (Hard Disk Drive), a flash memory, or any kind of non-volatile memory devices may be used as the memory 15. The programs are read by the controller 14 (CPU 141) and loaded onto the RAM 142 to be executed.

The communication unit 16 controls communication with the external electronic device(s) in conformity with a predetermined communication standard. The communication unit 16 has a network card, for example, and is capable of communication with the external electronic device(s) via the LAN (Local Area Network). Alternatively, the communication control may be done in conformity with a communication standard which does not require cables, such as the wireless LAN, or the external device(s) may be connected directly with the USB (Universal Serial Bus) cables, etc.

The heat source driver 121 causes the heater 12 to operate according to the control signals from the controller 14. The heat source driver 121 may turn on and off the operation of each of the multiple heaters 12, or it may set multiple levels of the operation. Alternatively, the heat source driver 121 may arrange the multiple heaters 12 in multiple groups of one or more of them, and switch the operation status by each group.

The suction driver 111 causes the suction unit 11 to perform the operation of sucking air (air suction operation). As described above, in a case where the suction unit 11 has a suction fan, the suction driver 111 drives the rotational motor which rotates the suction fan to rotate the suction fan at an appropriate speed. The suction driver 111 may set the suction amount (rotation speed) in multiple steps or continuously, or it may simply turn on and off the suction operation.

The guide roller driver 331 causes the guide roller 33 to rotate on the basis of the control signals from the controller 14. The control signals obtained from the controller 14 include information to determine the timing and speed of rotation which allows the rotation of the guide roller 33 to be synchronized with the unwinding roller 31 and/or the winding roller 32 according to the information on the rotation state of the unwinding roller 31 and/or the winding roller 32 obtained via the communication unit 16.

The dryer 10 may also include an operation receiver, a display or a notification operation unit so that, in case of an error in the drying operation, it may display or notify the error in a predetermined way, or receive an instruction from the user to forcibly stop the drying operation. Alternatively, all of the operation receipt, display, and notification may be done in the operation receiver 27 or the display 28 of the image recorder 20.

The controller 24 of the image recorder 20 controls the operation of forming an image(s) on the recording medium M. The controller 24 causes the image forming operation unit 21 to form an image(s) on the basis of the image data, setting data, etc. obtained externally via the communication unit 26. The controller 24 has a CPU, a RAM, etc. to execute various kinds of software (programs). The controller 24 may have a dedicated hardware circuit and process the image data by that hardware circuit.

The communication unit 26 controls the communication with the external electronic device(s) in conformity with a predetermined communication standard. The communication unit 26 has a network card, for example, and is capable of communication with the external electronic device(s) via the LAN (Local Area Network). Alternatively, the communication control may be done in conformity with a communication standard which does not require cables, such as the wireless LAN, or the external device(s) may be connected directly with the USB (Universal Serial Bus) cables, etc. The communication unit 26 and the communication unit 16 may communicate with each other according to the common communication standard.

The image forming operation unit 21 performs an operation of ejecting ink from each nozzle at appropriate timings. The mechanism of ink ejection may be suitably selected from, for example, the piezo type or the thermal type, in which the pressure variation is appropriately added to ink in the ink flow path communicating the nozzles. The image forming operation unit 21 switches the action of ejecting ink on and off for each nozzle in each clock cycle on the basis of the image data. Alternatively, the image forming operation unit 21 may switch the ink ejection amount in multiple steps on the basis of the image data.

The memory 25 stores therein image data, setting data concerning the image forming operation, and programs and settings concerning the control operation of the controller 24, etc. The image data is obtained externally via the communication unit 26 as described above, processed as necessary, and stored until the end of the image forming operation by the image forming operation unit 21. Alternatively, the image data may not be deleted after the end of the image forming operation until the instruction is received from the user or until the storage reaches the full capacity and the data is overwritten by new image data.

The conveyance driver 311 causes the unwinding roller 31 and/or the winding roller 32 to rotate. The conveyance driver 311 has a rotational motor, for example, and rotates the rotational motor at a rotation speed corresponding to the moving speed set for the recording medium M.

The operation receiver 27 receives the input operation externally, from the user, for example. The operation receiver 27 includes a touch panel superimposed on the display 28, a push button switch, etc. When the input operation is detected, the operation receiver 27 outputs, to the controller 24, the detected operation information as input signals.

The display 28 displays the status concerning the image forming operation, the menu concerning the operation receipt from the user, etc. on the basis of the control of the controller 24. The display 28 includes a display screen such as a liquid crystal display, a warning alert light such as an LED, etc.

In the inkjet textile printing system 1 of this embodiment, a process of image forming operation (inkjet textile printing method) is started as the controller 24 of the image recorder 20 obtains image data and an instruction of image forming externally via the communication unit 26, or obtains an instruction of image forming of the image data stored in the memory 25 via the operation receiver 27.

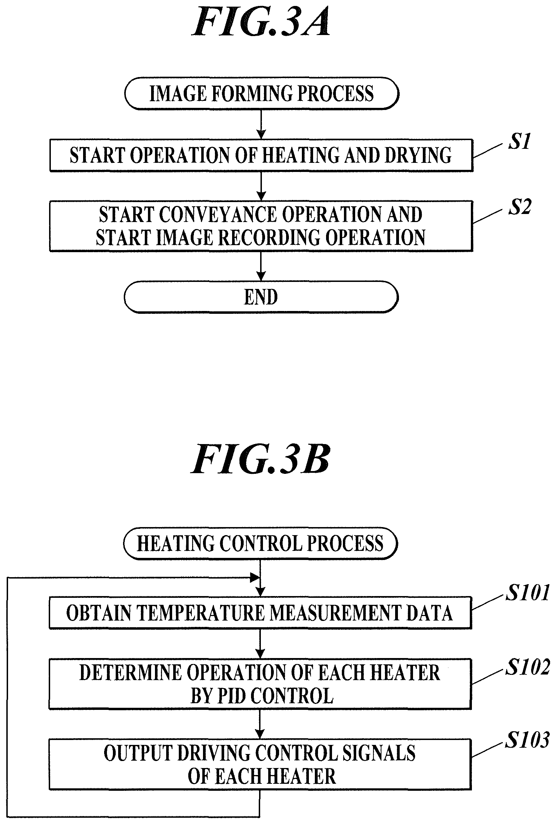

FIG. 3A is a flowchart showing steps of an image forming process executed in the inkjet textile printing system 1 of the present embodiment.

In the image forming operation, the controller 24 outputs the control signals concerning the image forming operation to the dryer 10 via the communication unit 26. The controller 14 of the dryer 10 causes the guide roller driver 331 to operate in synchronization with the operation of the conveyance driver 311 according to those control signals. In a case where the temperature inside the drying room 19 is not appropriately adjusted or in a case where the operation of the suction driver 111 is suspended, the controller 24 causes the controller 14 to start the control concerning the temperature adjustment (heating control process described later), and starts (or restarts) the operation of the suction driver 111 (Step S1; heating step). In this way, the dryer 10 performs the operation of drying the recording medium M (drying method).

The controller 24 causes the conveyance driver 311 to convey the recording medium M. The controller 24 causes the image forming operation unit 21 to eject (blow) ink in a designated color onto the recording medium M at the appropriate positions according to the image data to perform the image recording operation (textile printing) (Step S2; image recording step).

FIG. 3B is a flowchart showing control steps by the controller 14 of the heating control process executed in the dryer 10. The heating control process may be executed continually at appropriate intervals before it is ended by an interrupting process, etc.

After the start of the heating control process, the controller 14 obtains temperature measurement data from the temperature measurer 13 (Step S101). The controller 14 determines the status of on and off (in a case where the operation level is set in multiple steps, the operation level) of each heater by PID control on the basis of the history of the measured temperature value (Step S102). As described above, it is necessary that the solvent is appropriately evaporated and that the solvent does not react to the high temperature so as not to generate odor. Thus, the temperature is controlled to be in a range from 100 °C to 200 °C here, for example. For the aqueous pigment ink for textile printing, there may be an appropriate range of not only the drying state of the solvent but also the fixing temperature of the included fixing resin. For some fixing resin, the texture of the fabric may be degraded when the fixing temperature is inappropriate. In consideration of such conditions, the temperature may be controlled to be in a range from 100 °C to 200 °C.

The controller 14 outputs driving control signals to switching elements to switch the state of electricity conduced to each heater 12 and/or to the suction driver 111 as necessary (Step S103). That is, the temperature control is done by the adjustment of the state of heating of the heater(s) 12 and/or the suction amount per unit of time of the suction unit 11. Then, the process of the controller 14 is back to Step S101.

The process of Step S101 may be executed at predetermined time intervals. Though the PID control is executed in the above, it is not limitative as long as the heating temperature is controlled appropriately.

During the process described above, the operation of sucking air of the suction unit 11 may be continuously performed. Then, at too low a suction speed, the evaporated solvent may be flown not to the suction opening 11a but to the side of the heater 12, and the solvent may be further heated on the surface of the heater 12 and generate odor. On the other hand, at too high a suction speed, the air is flown before being heated enough and the temperature near the fabric may easily fall, which necessitates the heating operation of the heater 12 more. Accordingly, the operation of the suction unit 11 is to be determined such that the air flow speed on the surface of the recording medium M is equal to or more than 0.1 m/sec and less than 10.0 m/sec, for example, by the suction operation.

As described above, the dryer 10 of this embodiment includes the heater 12 which heats the fabric (recording medium M) without contacting it, and the suction unit 11 which sucks air at a position (suction opening 11a) where the fabric is between the heater 12 and the suction unit 11. Accordingly, the solvent of ink evaporated from the fabric is sucked to the opposite side of the heater(s) 12. Thus, the dryer 10 appropriately dries the recording medium M while the solvent is prevented from reacting to the heat of the heater(s) 12 and generating odor. As the air easily passes through especially when the fabric is used, the evaporated solvent which passes through the fabric may be appropriately moved to the direction away from the heater 12 with the air flow and sucked to be certainly discharged. The heated air is not strongly sent toward the recording medium M, and the air is flown with the suction operation by the suction unit 11. Thus, the air inside the drying room 19, especially the evaporated solvent, may not be convected or held inside but may be certainly discharged. In a case where the sucked air is circulated and sent back, the solvent constituent is removed before the air is sent back.

The heater 12 is arranged on the side of the one surface of the fabric, and the suction opening 11a of the suction unit 11 is arranged on the opposite side of the one surface of the fabric. As the solvent evaporated from the fabric is simply sucked to the opposite side of the heater as described above, the solvent may not be easily flown to the side of the heater 12 with a simple configuration.

The one surface is the opposite of the surface on which ink lands of the fabric. Accordingly, the ink landing surface is not directly heated and the solvent evaporated from the surface on which ink lands may be prevented from moving to the back surface. Thus, the image quality may be affected less and the generation of odor may be more certainly prevented, while an appropriate drying operation is executed.

The suction opening 11 a of the suction unit 11 to suck the air is arranged at a position upper than the heater 12 in the gravitational direction. The water vapor which is a lot included in the vapor has a specific gravity of 0.46 (at 100 °C) and thus flows upward. The glycol solvent used mainly for the solvent is easily flown with the flow of the water vapor. Accordingly, as the suction opening 11a is arranged on the downstream side in the direction of that flow in consideration of the specific gravity of the vapor, the evaporated solvent may be more certainly sucked and the solvent may be prevented from reacting to the heat of the heater 12 and generating odor.

The dryer 10 further includes the controller 14 which controls the heating operation of the heater12 and the suction operation of the suction unit 11. The controller 14 controls the operation status of the heater 12 and/or the suction unit 11 such that the temperature of the fabric is in a range from 100°C to 200°C in the operation of drying the fabric. Accordingly, as the solvent appropriate for improvement of the ink ejection capacity is certainly evaporated and the temperature is controlled in the range to prevent the generation of odor because of the heating of the solvent, the recording medium M (fabric) may be stably dried.

The dryer 10 further includes the fabric temperature measurer 131 which measures the temperature of the fabric. The controller 14 controls the adjustment of the temperature of the fabric on the basis of the temperature measured by the fabric temperature measurer 131. In that way, the temperature control done by the direct measurement of the temperature of the fabric may prevent more certainly the situations such as: the unstableness of the drying operation; the overheating of the fabric to the extent that the solvent reacts; and the bad effects of the inappropriate temperature on the image quality of the textile printing.

The dryer 10 includes the heat source temperature measurer 132 which measures the temperature of the heater 12. The controller 14 controls the adjustment of the temperature of the fabric on the basis of the temperature measured by the heat source temperature measurer 132.

The surface temperature of the fabric may be estimated from the temperature of the heater 12 depending on the distance between the heater 12 and the fabric, the material or thickness of the fabric, and the conveyance speed of the fabric. Thus, without the direct measurement of the temperature of the fabric, the surface temperature of the fabric may be appropriately controlled on the basis of the temperature of the heater 12 for the certain drying operation, and the generation of odor may be prevented.

The dryer 10 includes the conveyor 30 which conveys the fabric to pass through the position between the heater 12 and the suction opening 11a of the suction unit 11. As the recording medium M (fabric) is moved at an appropriate speed during the drying operation, the fabric may be dried for an appropriate time for drying the solvent. Then the fabric may be dried efficiently and the generation of odor may be prevented. Though the conveyor 30 may be separate from the dryer 10, the heating of the recording medium M may be easily and appropriately adjusted as the dryer 10 performs, with a configuration concerning the conveyance in part or whole, the appropriate conveyance speed control.

The dryer 10 includes the case forming the drying room 10 with the heater 12 and the suction opening 11a inside. The conveyor 30 contacts the fabric only outside the case to support the fabric. The supporting members such as the rollers used for the conveyance has a thermal conductivity different from that of the air. Thus, as the fabric may touch them inside the drying room 19, the temperature may be affected. Then the surface temperature of the fabric may deviate from the desired temperature setting. Such temperature deviation and unevenness may be restrained as the supporting members are arranged only outside of the drying room 19. The supporting members are not to be arranged inside because it is possible that the supporting members prevent or disturb the flow of air inside the drying room 19. Thus, the appropriate flow of air with the suction operation of the suction unit 11 makes it possible more certainly to separate the evaporated solvent from the heater 12 so that it is sucked and discharged.

The conveyor 30 includes the unwinding roller 31 which unwinds the continuous fabric and the winding roller 32 which winds the fabric outside the case. In a case where the continuous recording medium is used, the recording medium may be passed from one roller to another roller such as those mentioned above in the image forming operation and the drying operation. Then, the recording medium may be supported easily and stably, and the supporting members may affect the recording medium less.

The ink contains water, glycol solvent, pigment, and fixing resin. In a case where such aqueous pigment ink is used to form an image(s), the dryer 10 of this embodiment may effectively achieve both the certain drying operation and the prevention of the generation of odor.

The glycol solvent includes at least any of glycerin, ethylene glycol, propylene glycol, and diethylene glycol. In a case where the glycol solvent which is appropriate especially for keeping the stability of the ink ejection capacity such as those mentioned above, the evaporated solvent may be appropriately separated from the heater 12 to be sucked, in the dryer 10 of this embodiment. Thus, the dryer 10 may achieve more certainly both the prevention of the degradation of the image quality and the prevention of the generation of odor.

The amount of the glycol solvent contained in the ink is equal to or more than 20% by mass and less than 60% by mass. Especially in such an amount, the ink ejection capacity may be appropriately improved and the generation of odor may be prevented by the effective suction of a large amount of the evaporated solvent.

The image forming device (the inkjet textile printing system 1 integrally formed or sold altogether) of this embodiment includes the dryer 10 described above and the image recorder 20 which blows ink. Such an image forming device may achieve both the appropriate quality in the formed image(s) and the prevention of the generation of odor in the drying and fixing operation.

The drying method of the fabric of this embodiment includes the heating step at which the heater12 generating heat heats the fabric without contacting the fabric and the air is sucked at the position which is on the opposite side of the fabric from the heater 12. In such a drying method, the solvent of the ink evaporated from the fabric is sucked to the opposite side of the heater 12. Thus, the recording medium M may be appropriately dried and the solvent is prevented from reacting to the heat of the heater 12 and generating odor.

The inkjet textile printing method of this embodiment includes the image recording step at which the ink is blown onto the fabric for textile printing, and the heating step at which the heater 12 generating heat heats the fabric without contacting the fabric and the air is sucked at the position (suction opening 11a) which is on the opposite side of the fabric from the heater 12. Such a textile printing method may achieve both the appropriate image quality in the formed image(s) and the prevention of the generation of odor.

### [The Second to Fourth Embodiments]

Next, the inkjet textile printing system in other embodiments is described.

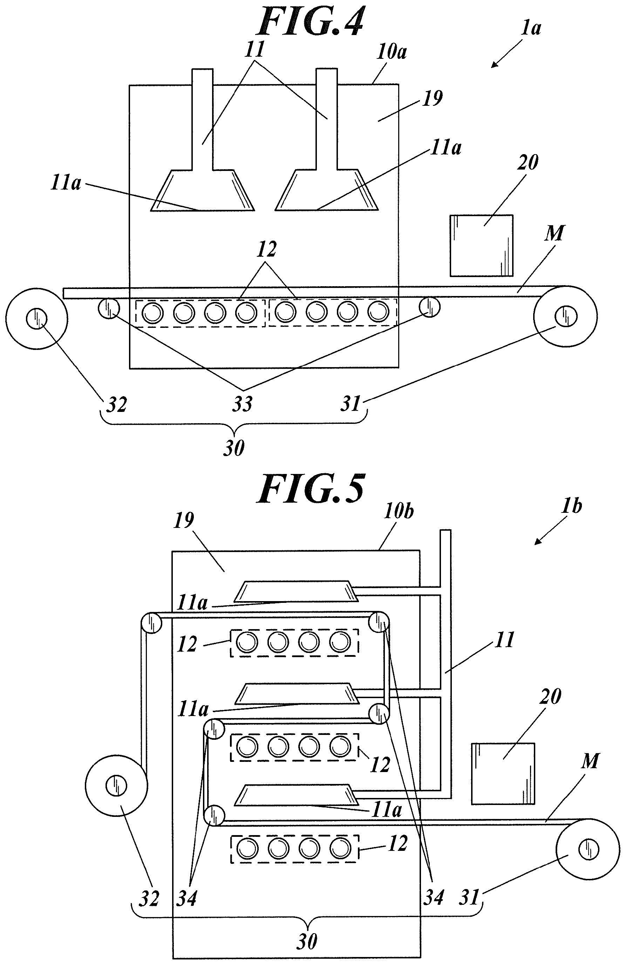

FIG. 4 is a schematic drawing showing an overall configuration of an inkjet recording system 1a of the second embodiment.

In this inkjet recording system 1a, two sets of the suction unit 11 and the heater 12 facing the suction opening 11a of the suction unit 11 are arranged inside the drying room 19. The two sets are arranged in the same positioning along the moving direction of the recording medium M which moves on a plane. There may be multiple sets of the suction opening 11a and the heater 12 which are arranged opposite to each other with the moving path of the recording medium M in between.

FIG. 5 is a schematic drawing of an overall configuration of an inkjet textile printing system 1b including a dryer 10b as a drying device of the third embodiment.

In this inkjet textile printing system 1b, the recording medium M passes between three sets of the heater 12 and the suction opening 11a to be dried, while varying the moving direction inside the drying room 19. The air including the evaporated solvent flown from the suction openings 11a may be connected to a common path. The horizontal area occupied by the dryer 10 is larger in a horizontal arrangement of such multiple sets of the heater 12 and the suction opening 11a. Thus, as the recording medium M is moved multiple times in stacks in the perpendicular direction, the horizontal area occupied may be smaller.

In that case, the front and back surfaces of the recording medium M in the middle stack are turned upside down compared to the recording medium M in the top and bottom stacks. Accordingly, in the middle stack, the heater 12 is arranged to heat the recording medium M on the side of the surface on which ink lands (front surface) and the suction opening 11a is arranged on the side of the back surface. As the fabric has a lot of pores, a part of the evaporated solvent passes through the fabric and flows into the suction opening 11a. The glycol solvent easily flows, with the water vapor, to the suction opening 11a which is arranged on the upper side in the gravitational direction.

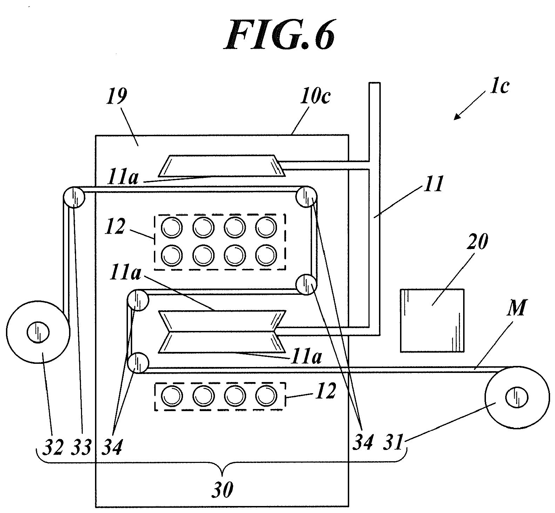

FIG. 6 is a schematic drawing showing an overall configuration of an inkjet textile printing system 1c including a dryer 10c as a drying device of the fourth embodiment.

In this inkjet textile printing system lc, similarly to the dryer 10b of the third embodiment, the recording medium M passes between the three sets of the heater 12 and the suction opening 11a to be dried, while varying the moving direction inside the drying room 19. In all of the three sets, the heater 12 is arranged on the side of the back surface of the recording medium M and the air including the evaporated solvent is sucked to the suction opening 11a on the front surface.

Thus, the recording medium M is always heated from the side of the back surface. Accordingly, the air flows from the upper side to the lower side and is sucked to the suction opening 11a in the middle stack. In this process, the suction force from the suction opening 11a may be varied in each stack. For example, as vapor is likely to move upward in the gravitational direction, the suction force from the suction opening 11a in the middle stack may be comparatively stronger than the upper and lower stacks.

As described above, the dryer 10 of the above embodiments may include the multiple heaters 12 and the suction openings 11a. In a case where the heat necessary for drying may not be maintained with a set of the heater 12 and the suction opening 11a depending on the material of the fabric, the conveyance speed, the ink amount to be ejected, there may be multiple sets of them. In that case, too, both the certain drying of the recording medium M (fabric) and the prevention of the generation of odor are achieved and the image(s) in good quality may be obtained, as the positional relation of each heater 12 and the suction opening 11a is appropriately set as a whole as described above.

The present invention is not limited to the embodiments described above, and various kinds of modification may be added thereto.

For example, in the above embodiments, the fabric is continuously conveyed to pass through the inside of the drying room 19, but the conveyance operation may be suspended in the drying operation.

In the above embodiments, the fabric onto which ink ejected from the image recorder 20 has landed is directly sent to the dryer 10 to be dried, though not limited thereto. The fabric onto which ink has landed may be provisionally dried in another dryer once and sent to the dryer 10 anew. In that case, after the fabric is dried provisionally and before it is sent to the dryer 10, the post-processing such as cutting of the fabric may be done. The provisional drying process may be done at a temperature at which odor is not generated, that is, for example, at a temperature higher than the normal temperature and near the boiling point of the solvent.

In a case where solvent other than the glycol solvent is contained or special material is used for the resin, etc., the temperature setting may be suitably adjusted according to the constituent of ink. The contained amount of the solvent may be suitably adjusted according to the type of the solvent, for example. The suction opening 11a may be arranged in a direction relative to the recording medium M which is determined in consideration of the specific gravity of the vapor as a whole depending on the ratio of the solvent and water to the recording medium M.

In the above embodiments, the heater 12 is arranged on the side of the one surface of the recording medium M conveyed on a plane and the suction opening 11a is arranged on the opposite side of the one surface. However, the heater 12 may be arranged on the inner circumferential side of the recording medium M which is conveyed along the curved surface, and the suction opening(s) 11a may be arranged on the curved surface on the outer circumferential side.

In the dryers 10b and 10c of the third and fourth embodiments above, the direction of conveyance of the recording medium M is varied by the guide roller 34 inside the drying room 19. However, the recording medium M may be configured not to contact the guide roller 34 inside the drying room 19 and the direction of conveyance of the recording medium M may be varied by the guide roller on the outside after the recording medium M is pulled outside the drying room 19 once. The recording medium M may be prevented from being heated excessively by the guide roller 34 as a result of heating of the guide roller 34 inside the drying room 19. On the other hand, a configuration in which the recording medium M is supported by the supporting member(s) inside the dryer is not necessarily excluded.

In a case where multiple sets of the heater 12 and the suction opening 11a and each set has a separated part of the drying room 19 and not affected by the positions of the heaters 12 and the suction openings 11a in the other sets, the positional relation of the heater 12 and the suction opening 11a may be determined independently without consideration of the positional relations of the other sets.

In the above embodiments (similarly to the first embodiment in the other embodiments), the surface temperature of the fabric and/or the temperature of the heater 12 (including the temperature of the air or members around the heater 12) is measured, for example. However, in a case where the surface temperature of the fabric may be estimated from the temperature of the air at a predetermined position inside the drying room 19, the air temperature at the predetermined position may be measured to be used (alone or in combination) for the temperature control.

In the above embodiments, aqueous pigment ink is used. However, solvent other than aqueous ink may be used.

Furthermore, the specific configuration, construction, arrangement, and control and their processes described in the above embodiments may be appropriately modified without departing from the scope of the present invention.

### Reference Signs List

- 1, 1a, 1b, 1c: Inkjet Textile Printing System
- 10, 10b, 10c: Dryer
- 11: Suction Unit
- 11a: Suction Opening
- 12: Heater
- 13: Temperature Measurer
- 14: Controller
- 141: CPU
- 142: RAM
- 15: Memory
- 16: Communication Unit
- 19: Drying Room
- 20: Image Recorder
- 21: Image Forming Operation Unit
- 24: Controller
- 25: Memory
- 26: Communication Unit
- 27: Operation Receiver
- 28: Display
- 30: Conveyor
- 31: Unwinding Roller
- 32: Winding Roller
- 33, 34: Guide Roller
- 111: Suction Driver
- 121: Heat Source Driver
- 131: Fabric Temperature Measurer
- 132: Heat Source Temperature Measurer
- 311: Conveyance Driver
- 331: Guide Roller Driver
- M: Recording Medium

## Claims

1. A drying device (10) to dry fabric (M) on which textile printing is performed by ink being blown, the drying device comprising:
a heat source (12) which generates heat at a position where the heat source does not contact the fabric; and
a suction unit (11) which sucks air at a position where the fabric is between the heat source and the suction unit.

2. The drying device according to claim 1,
wherein the heat source is arranged on a side of one surface of the fabric, and
wherein a suction position where the air is sucked by the suction unit is on an opposite side of the one surface of the fabric.

3. The drying device according to claim 2, wherein the side of the one surface is an opposite side of a surface which ink lands on of the fabric.

4. The drying device according to any one of claims 1 to 3, wherein a suction position where the air is sucked by the suction unit is above the heat source in a gravitational direction.

5. The drying device according to any one of claims 1 to 4, comprising a controller (14) which controls a heating operation of the heat source and a suction operation of the suction unit,
wherein the controller performs control such that a temperature of the fabric is from 100 °C to 200 °C in an operation of drying the fabric.

6. The drying device according to claim 5, comprising a first measurer (131) which measures the temperature of the fabric,
wherein the controller performs control concerning adjustment of the temperature of the fabric on a basis of a measured temperature by the first measurer.

7. The drying device according to claim 5 or 6, comprising a second measurer (132) which measures a temperature of the heat source,
wherein the controller performs control concerning the adjustment of the temperature of the fabric on a basis of a measured temperature by the second measurer.

8. The drying device according to any one of claims 1 to 7, comprising a conveyor (30) which causes the fabric to pass through a position between the heat source and a suction position where the air is sucked by the suction unit.

9. The drying device according to claim 8, comprising a case as a drying room (19) which has the heat source and the suction position inside,
wherein the conveyor contacts the fabric only outside the case only to support the fabric.

10. The drying device according to claim 9, wherein the conveyor has, outside the case, an unwinding operation unit (31) which unwinds the fabric which is continuous and a winding operation unit (32) which winds the fabric.

11. An image forming device (20) comprising:
the drying device according to any one of claims 1 to 10; and
an image recording unit (21) which blows ink.

12. The image forming device according to claim 11, wherein the ink contains water, glycol solvent, pigment, and fixing resin.

13. The image forming device according to claim 12, wherein the glycol solvent contains at least one of glycerin, ethylene glycol, propylene glycol, and diethylene glycol.

14. The image forming device according to claim 12 or 13, wherein an amount of the glycol solvent contained in the ink is equal to or more than 20% by mass and less than 60% by mass.

15. A drying method to dry fabric (M) on which textile printing is performed by ink being blown, the drying method comprising a heating step of heating the fabric with a heat source (12) which generates heat at a position where the heat source does not contact the fabric and sucking air at a position which is on an opposite side of the fabric from the heat source.

16. An inkjet textile printing method comprising:
an image recording step of performing textile printing by blowing ink on fabric (M); and
a heating step of heating the fabric with a heat source (12) which generates heat at a position where the heat source does not contact the fabric and sucking air at a position which is on an opposite side of the fabric from the heat source.

17. The inkjet textile printing method according to claim 16, wherein the ink contains water, glycol solvent, pigment, and fixing resin.

18. The inkjet textile printing method according to claim 17, wherein the glycol solvent contains at least one of glycerin, ethylene glycol, propylene glycol, and diethylene glycol.

19. The inkjet textile printing method according to claim 17 or 18, wherein an amount of the glycol solvent contained in the ink is equal to or more than 20% by mass and less than 60% by mass.
